Europäisches Patentamt

**European Patent Office**

Office européen des brevets

(11) Veröffentlichungsnummer: **0 314 823**
**B1**

(12) **EUROPÄISCHE PATENTSCHRIFT**

(45) Veröffentlichungstag der Patentschrift:
**12.09.90**

(51) Int. Cl.⁵: **F16K 27/08**

(21) Anmeldenummer: **87116113.9**

(22) Anmeldetag: **02.11.87**

(54) Armatur mit schraubenlosem Deckel.

(43) Veröffentlichungstag der Anmeldung:
**10.05.89 Patentblatt 89/19**

(45) Bekanntmachung des Hinweises auf die Patenterteilung:
**12.09.90 Patentblatt 90/37**

(84) Benannte Vertragsstaaten:
**AT BE CH DE ES FR GB IT LI LU NL SE**

(56) Entgegenhaltungen:
**DE-A- 3 428 636**
**DE-A- 3 440 464**
**GB-A- 2 085 998**
**US-A- 2 610 820**
**US-A- 2 653 003**
**US-A- 2 660 191**

(73) Patentinhaber: **Johannes Erhard, H. Waldenmaier Erben Süddeutsche Armaturenfabrik GmbH & Co.,
Postfach 1280, D-7920 Heidenheim(DE)**

(72) Erfinder: **Smetan, Harald, Schwalbenweg 9,
D-7921 Nattheim(DE)**

(74) Vertreter: **Seeger, Wolfgang, Dipl.-Phys., SEEGER &
SEEGER Patentanwälte & European Patent Attorneys
Georg-Hager-Strasse 40, D-8000 München 70(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Armatur mit einem Gehäuse, in dem ein über eine Spindel verstellbares Absperrteil untergebracht ist, mit einem Deckel und einer Gewindebuchse.

Bei den bekannten Absperrschiebern ist die im Querschnitt ovale oder runde Gehäusekammer nach oben hin offen ausgebildet und mit einem oberen Anschlußflansch versehen, auf den die Gehäusehaube mit ihrem Hauptflansch mittels Flanschverbindungsschrauben aufgeschraubt ist. Nachteilig bei diesen mit einer angeflanschten Gehäusehaube versehenen Armaturengehäusen ist es, daß das beim Festziehen der Gewindespindel am Ende des Schließvorganges auf das Armaturengehäuse übertragene Drehmoment auch von den Verbindungsschrauben der Flanschverbindung zwischen Gehäusehaube und Gehäuseaufsatz aufgenommen werden muß. Da das Handrad, insbesondere bei der Bedienung durch ungeschultes Personal, häufig noch in der Schließstellung der Armatur mit großem Kraftaufwand und manchmal sogar unter Zuhilfenahme von Hebelarmen weitergedreht wird, kann es zu sehr hohen Spindelkräften kommen, die in Verbindung mit der Gehäusebelastung durch den Mediumsdruck eine Dehnung der Flanschverbindungsschrauben auslösen. Durch diese Dehnung liegen die Flanschdichtungen nicht mehr satt auf und die Absperrarmatur kann im Bereich der Flanschverbindungen undicht werden.

Aus der DE-A 3 428 636 ist eine Armatur bekannt, bei der die Gehäuseöffnung umlaufend nach innen abgekröpft ist und durch einen den Gehäuserand hintergreifenden, mit einem Dichtring versehenen Gehäusedeckel von innen druckdicht abgeschlossen ist, der einen nach außen ragenden Innengewindestutzen trägt, in den eine Führung für die Spindel, die Spindeldichtung und ein Stützwiderlager für den Spindelbund aufweisende Verschlußschraube eingedreht ist, die über einen eingelegten Stützring mit zwei am Gehäuserand aufliegenden Stützfüßen gleichzeitig der Gehäusedeckel mit dem Gehäuse verspannt wird, wobei der Innengewindestutzen des Gehäusedeckels im Außendurchmesser bis nahezu auf die Breite der Gehäuseöffnung erweitert ist und die Verschlußschraube innen einen Rücksprung für die Abstützung des Spindelbundes und außen ein sich über ihre ganze Höhe erstreckendes Außengewinde trägt, wobei der Innengewindestutzen mit zwei im Randbereich der Gehäuseöffnung gegenüberliegenden, nach außen vorspringenden Montagehaltenocken versehen ist, die von einer Führungsleiste der beiden Stützfüße beim Eindrehen des Stützringes in die Abstützstellung hintergriffen werden.

Bei dieser Armatur ist auf der Oberseite ein umlaufender Spalt exponiert, der außen durch den abgekröpften Rand des Gehäuses und innen durch den vertikalen Stufenrand des Deckels begrenzt ist, der nach unten abgewinkelt ist, da er hinter die Unterseite des abgekröpften Randes des Gehäuses greifen muß. Durch diesen Spalt kann Feuchtigkeit eindringen, was die Gefahr von Korrosion hervorruft. Dieser Nachteil wirkt sich besonders stark aus, wenn diese Armatur im Erdbereich liegt.

Noch erheblich nachteiliger wirkt diese Konstruktion sich aus, wenn diese unter der Erdoberfläche verlegte Armatur gewartet oder repariert werden muß. Weil nämlich der Deckel, wenn er zu Wartungszwecken herausgenommen werden soll, zunächst in das Gehäuse hinein bewegt und dabei seitlich gekippt werden muß, wird im allgemeinen dabei gleichzeitig Sand, Erde oder sonstiger Schmutz von dem Deckel, zumindest jedoch aus dem exponierten Spalt, in das Gehäuse hineinfallen, was unerwünscht ist, da hierdurch z.B. die Gefahr der Trinkwasserverunreinigung gegeben ist.

Aufgabe der Erfindung ist es, ausgehend von dem eingangs genannten Stand der Technik, eine Absperrarmatur für Rohrlietungen zu schaffen, die mit möglichst wenigen Schrauben auskommt, auch im Rohrgraben montiert werden kann, im Betrieb eine hohe Korrosionsbeständigkeit aufweist, und problemlos gewartet werden kann.

Diese Aufgabe ist gemäß der Erfindung gelöst durch ein Einlegestück, das ein Auflager für den Spindelbund und eine Ausnehmung zur Durchführung der Spindel aufweist und, mit mindestens zwei Endbereichen seiner Oberfläche gegen die Unterseite von Widerlagern anliegend, mittels der Spindelbuchse mit dem Deckel verbunden ist, der umlaufend auf dem oberen Rand des Gehäuses anliegt.

Die Erfindung weist eine Reihe von Vorteilen auf:

Zunächst ist der Vorteil zu nennen, daß durch die erfindungsgemäße Konstruktion keinerlei Beschränkungen hinsichtlich der geometrischen Form des Oberteils des Gehäuses einerseits und des Deckels andererseits erzwungen werden. Beide brauchen in der Form nur aneinander angepaßt zu sein, weitere Beschränkungen gibt es nicht.

Im übrigen erfordert die erfindungsgemäße Armatur so wenige Bauteile, daß sie mit einer kurzen Bauhöhe aufgebaut werden kann. Hinzu kommt, daß zum einen wegen der geringen Anzahl von Bauteilen, und zum anderen, weil keine Präzisionsbauteile erforderlich sind, die Absperrarmatur mit geringem Kostenaufwand herstellbar ist.

Hinzu kommt der Vorteil, daß die sonst üblichen Halteschrauben aufgrund der erfindungsgemäßen Konstruktion entfallen sind, so daß auch dadurch sowohl die Korrosionsbeständigkeit der Armatur erhöht als auch die Kosten der Armatur verringert werden.

Von besonderer Bedeutung ist der Vorteil der Erfindung, daß kein nach oben gerichteter Spalt vorhanden ist. Die Armatur kann somit auch im Erdbereich verlegt montiert werden und auch jederzeit leicht gewartet oder repariert werden, ohne daß sie deshalb notwendigerweise aus dem Erdbereich herausgenommen werden müßte. Der letzte Vorteil ergibt sich insbesondere daraus, daß, wenn die Armatur gewartet werden soll, lediglich dieselbe bis zu einer geringen Höhe unterhalb des Deckels freigelegt und der Deckel von Sand und Erde gereinigt werden muß. Zum Öffnen der Armatur wird zunächst die Gewindebuchse herausgeschraubt, und dann kann der Deckel vertikal nach oben entnommen werden, so daß kein Schmutz in die Armatur hineinfallen kann.

Ein weiterer Vorteil der Erfindung liegt darin, daß sie eine einfache Montage ermöglicht. Zu diesem Zweck wird der Absperr- oder Abschlußkörper, mit der an ihm befestigten Spindel und dem auf der Spindel befindlichen Einlegestück von oben in den Gehäusehals hineingeschoben. Dann wird der Einlegekörper so gedreht, daß er mit seinen Endbereichen auf den Auflageflächen zu liegen kommt, die mit der Innenwand des Gehäusehalses verbunden sind. In dieser Stellung kann der Einlegekörper nicht nach unten fallen, so daß die Person, die die Armatur zusammensetzt, beide Hände frei hat, um den Deckel aufzulegen und die Gewindebuchse hineinzuschrauben.

Die mit den Endbereichen des Einlegestückes zusammenwirkenden Widerlager können einstückig mit dem Gehäuse ausgebildet sein. Dadurch wird die Gesamtkonstruktion verstärkt.

Nach einer bevorzugten Weiterbildung der Erfindung ist der obere Randbereich des Gehäuses zumindest an zwei Bereichen teilweise nach innen eingezogen und die dadurch gebildeten Unterseiten sind als Widerlager ausgebildet. Diese Weiterbildung der Erfindung bringt den Vorteil mit sich, daß die Widerlager ohne zusätzlichen Arbeitsgang, nämlich beim Gießen des Gehäuses selber, gebildet werden.

Nach einer anderen Weiterbildung der Erfindung sind an gegenüberliegenden Seiten des Armaturengehäuses mit Abstand vom oberen Rand desselben, nach innen vorstehende Vorsprünge ausgebildet, deren Abstand voneinander kleiner als der größte Durchmesser des Einlegestückes ist. Diese Ausführungsform der Erfindung weist den Vorteil auf, daß diese Vorsprünge, die konsolenartig ausgebildet sein können, ohne zusätzlichen Arbeitsgang, nämlich beim Gießen des Gehäuses ausgebildet werden können. Dabei werden die Vorsprünge zweckmäßigerweise so geformt, daß ihre obere Oberfläche als Auflageflächen für das Einlegestück geformt werden.

Nach einer bevorzugten Weiterbildung der Erfindung sind in dem oberen Bereich des Gehäusehalses an zwei gegenüberliegenden Seiten zwei abgewinkelte Erweiterungen ausgebildet, durch die in den Innenwänden je eine Nut gebildet ist, deren Breite gleich oder größer als die Breite der beiden Endbereiche des Einlegestückes ist. Diese Ausbildungsform weist einen besonderen Vorteil auf, der insbesondere dann zum Tragen kommt, wenn die Öffnung des Gehäuses länglich ausgebildet ist. Bei der Montage der Armatur wird das Einlegestück zunächst so orientiert, daß sein größter Durchmesser rechtwinklig zu der Verbindungslinie der durch die abgewinkelten Erweiterungen gebildeten Auflageflächen ist. Wenn der Einlegekörper sich auf der Höhe der durch die abgewinkelten Erweiterungen gebildeten Nuten befindet, wird er um 90° um die Spindel gedreht, so daß seine beiden äußeren Endbereiche in die Nuten hineingeschwenkt werden. In dieser Stellung ist das Einlegestück arretiert, so daß es nicht nach unten fallen kann. Wenn das Einlegestück danach mittels der Spindelbuchse mit dem Deckel zusammengeschraubt wird, drücken die beiden oberen Oberflächen der äußeren Endbereiche des Einlegestückes gegen die Unterseiten der gebildeten Nuten, welche als Widerlager dienen. Der sich nach oben erstreckende Bereich des Gehäuses ist im Querschnitt im wesentlichen länglich ausgebildet und der kleinere Durchschnitt der Öffnung ist kleiner als der größte Durchmesser des Einlegestückes. Aufgrund dieser Ausführungsform kann das Einlegestück leicht in den Gehäusehals hinabgesenkt werden. Wenn es dann um 90° gedreht wird, kann es nicht mehr aus dem Gehäusehals herausgezogen werden. Es liegt vielmehr mit seinen Endbereichen unterhalb der Widerlager.

Nach einer anderen Weiterbildung der Erfindung weist das Einlegstück an seiner Oberseite eine stufenartige Erhebung auf, deren Außenumfang komplementär zu einer Ausnehmung in der Unterseite des Deckels ausgebildet ist. Dieser Ausbildungsform der Erfindung gewährleistet eine formschlüssige Verbindung zwischen dem Einlegestück und dem Deckel der Armatur. Auf diese Weise ist gewährleistet, daß das Einlegestück sich beim Zusammenschrauben mit dem Deckel mittels der Spindelbuchse nicht verdreht. Es bleibt in jedem Falle in seiner Stellung, in der seine Endbereiche sich oberhalb der mit ihnen zusammenwirkenden Auflageflächen befinden. Gleiches gilt auch für die Demontage oder Öffnung der Armatur, z.B. zu Wartungszwecken. Wenn die Spindelbuchse herausgeschraubt wird, ändert das Einlegestück seine Orientierung relativ zu den Auflageflächen nicht. Nach Herausnahme der Spindelbuchse kann somit dieselbe entfernt und auch der Gehäusedeckel abgenommen werden, ohne daß eine Gefahr besteht, daß das Einlegestück verdreht wird und damit in die Armatur hineinfällt.

Der nach unten vorstehende Bereich des Deckels weist zweckmäßigerweise eine umlaufende Nut zur Aufnahme eines O-Ringes auf. Auf diese Weise ist eine sichere Dichtung der Armatur ohne weitere Halteteile ermöglicht.

Der Gehäusedeckel kann den nach oben weisenden Rand des Gehäuses vollständig abdecken. Er kann aber auch den oberen Rand des Gehäuses außen umlaufend umgreifen. Auf diese Weise ist sichergestellt, daß kein Sand, Erdreich oder dergleichen zwischen Deckel und Gehäuseöffnungsrand eindringen kann, auch dann nicht, wenn die Armatur im Erdreich verlegt ist und ein großer Druck auf das Erdreich oberhalb der Armatur ausgeübt wird.

Weitere Vorteile und Merkmale der Erfindung gehen aus den Ansprüchen und in Verbindung mit der Zeichnung und der Beschreibung hervor. Im einzelnen zeigen:

Fig. 1 einen Vertikalschnitt in Durchflußrichtung durch eine Armatur,
Fig. 2 einen Vertikalschnitt quer zu der Durchflußrichtung durch die Armatur,
Fig. 3 eine Draufsicht auf die in den Fig. 1 und 2 dargestellte Armatur,
Fig. 4 eine Draufsicht auf ein Einlegestück,
Fig. 5 einen Querschnitt eines Armaturdeckels, und
Fig. 6 einen Längsschnitt des in Fig. 5 gezeigten Armaturendeckels.

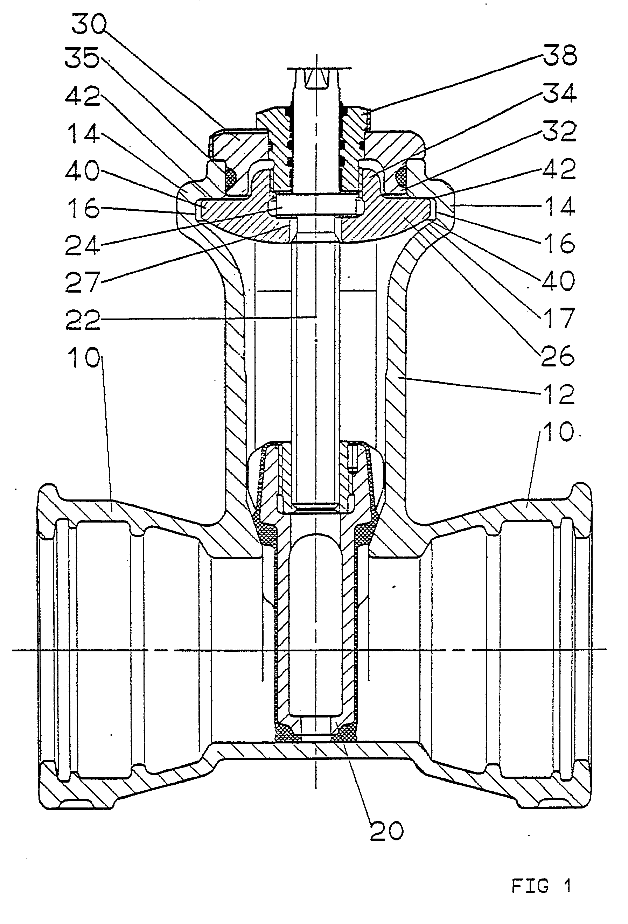

Die Fig. 1 zeigt einen vertikalen Schnitt in Strömungsrichtung durch die erfindungsgemäße Armatur. Das Gehäuse besteht im wesentlichen aus den beiden Ansatzrohren 10 und dem Gehäusehals 12. Letzterer weist in seinem oberen Endbereich rechts und links abgewinkelte Erweiterungen 14 auf, welche an den entsprechenden Innenseiten des Gehäusehalses 12 Nuten 16 bilden. Der obere Endabschnitt des Gehäusehalses 12 erstreckt sich im wesentlichen vertikal. In dem Armaturengehäuse befindet sich ein Abschlußkörper 20, der an einer Spindel 22 befestigt ist. Der Spindelbund 24 liegt mit seiner von der Spindel überstehenden Unterseite an einem Einlegestück 26 auf, welches ein Loch 27 zur Aufnahme der Spindel aufweist. Das Einlegestück 26 ist an seiner Unterseite, in Richtung zu den beiden Anschlußrohren der Armatur, konvex ausgebildet. Der Durchmesser des Einlegestückes 26 ist in der genannten Richtung größer als der Durchmesser des unteren Bereichs des Gehäusehalses 12. In dieser dargestellten Position kann das Einlegestück 26 nicht nach unten fallen, selbst wenn es nicht an dem Gehäuse-/Armaturdeckel 30 befestigt ist. Vielmehr wird es, wenn es nicht am Amaturdeckel 30 gehalten wird, mit seinen äußeren Unterseiten an den inneren Oberseiten der Erweiterungen des Gehäusehalses aufliegen.

Wie man ferner in Fig. 1 sieht, liegt ein Gehäusedeckel 30 mit seinem Außenumfang auf dem Rand der Armaturöffnung auf. Der Gehäusedeckel 30 weist einen nach unten vorstehenden Abschnitt 32 auf, der eine Ausnehmung aufweist. Diese nicht runde Ausnehmung ist komplementär zu einem nach oben vorstehenden Vorsprung 34 des Einlegestückes 26 ausgebildet.

Armaturdeckel 30 und Einlegestück 26 sind mittels einer Spindelbuchse 38 verbunden. Die Spindelbuchse 38 drückt zum einen den Spindelbund mit seiner unteren Oberfläche gegen die Auflagefläche in dem Einlegestück 26. Gleichzeitig werden durch die Spindelbuchse 38 Einlegestück 26 und Armarendeckel 30 gegeneinander gedrückt, so daß das Einlegestück mit seinen äußeren Endbereichen 40 von unten gegen die Abwinkelung 42 oberhalb der in dem Gehäusehals gebildeten Nut gedrückt wird, und daß gleichzeitig der Armaturdeckel 30 mit seinem äußeren Rand auf den Gehäusehals gedrückt wird. In Fig. 1 sieht man ferner einen O-Ring 35, der in einer Nut an dem nach unten vorstehenden Abschnitt des Armaturdeckels 30 eingelegt ist.

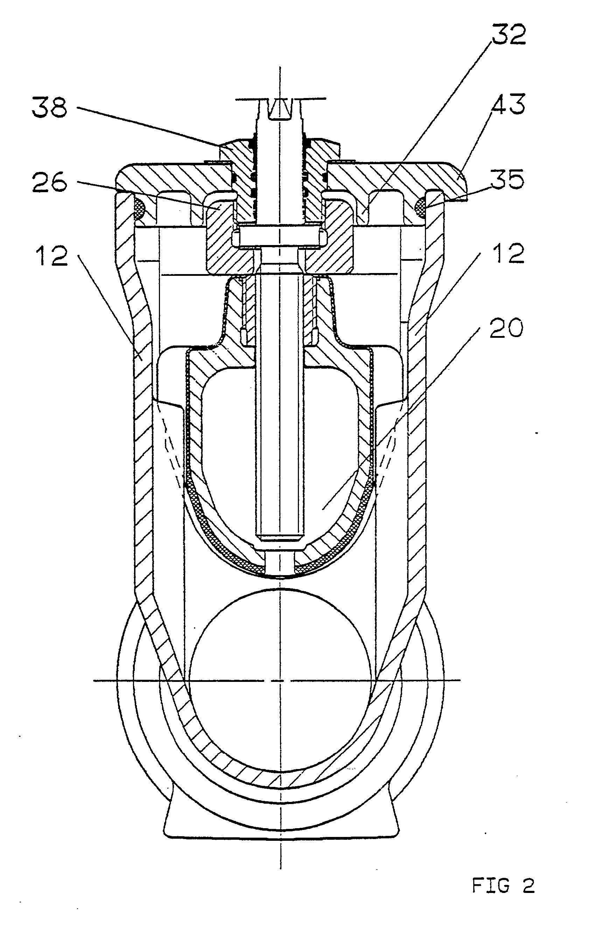

Die Fig. 2 zeigt einen Vertikalschnitt quer zur Strömungsrichtung durch die Armatur der Fig. 1. Gleiche Teile tragen dieselben Bezugszeichen wie in Fig. 1.

Auch auf dieser Figur 2 erkennt man, daß die Dichtung 35 tatsächlich ein umlaufender O-Ring ist. Diese Fig. 2 zeigt die Armatur in Offenstellung, in welcher der Abschlußkörper 20 von der Spindel nach oben verschoben worden ist. Ferner sieht man in dieser Fig. 2, daß auch in dieser Darstellung der nach unten vorstehende Abschnitt 32 des Armaturdeckels 30 rechts und links glatte Flächen hat, welche parallel zu den ihnen zugewandten Außenflächen des Einlegestückes 26 sind. Das Einlegestück 26 wird somit sowohl während der Montage als auch während der Demontage durch formschlüssigen Eingriff in die Ausnehmung in der Unterseite des Armaturdeckels 30 in seiner Position gehalten. Es kann somit weder beim Zusammenschrauben von Einlegestück und Armaturdeckel noch beim Lösen der Spindelbuchse und beim Abnehmen des Armaturdeckels versehentlich aus seiner Position herausgedreht werden, in welcher es mit seinen äußeren Unterseiten an den Seitenwänden des Gehäusehalses aufliegt.

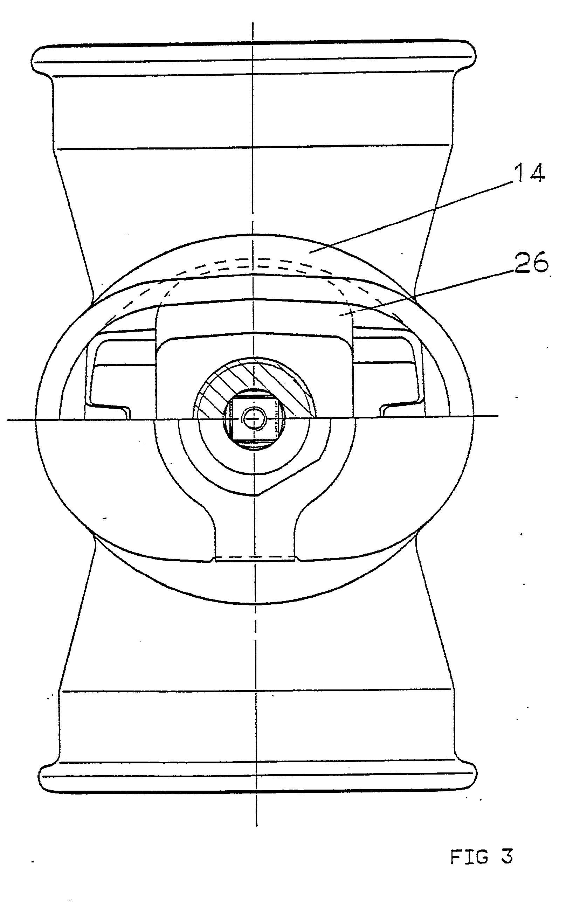

Die Fig. 3 zeigt eine Draufsicht auf die in den Fig. 1 und 2 dargestellten Armatur, teilweise in aufgebrochener Darstellung. Wie man in dieser Fig. 3 besonders gut sieht, ist die Öffnung des Gehäusehalses 12 ovalförmig ausgebildet. In diese Draufsicht stehen die abgewinkelten Erweiterungen 14 seitlich von der gezeichneten Gehäusehalsöffnung vor. Das Einlegestück 26 ist in seiner arretierten, in Fig. 1 gezeigten Stellung eingelegt. In dieser Orientierung ist die Länge des Einlegestückes 26 von links nach rechts größer als der Durchmesser des Gehäusehalses 12 sowohl an der Oberseite des Gehäusehalses als auch unterhalb der abgewinkelten Erweiterungen 14. In dieser Stellung kann das Einlegestück nicht in die Armatur hineinfallen. Wird es mit dem Armaturdeckel 30 zusammengeschraubt, so liegen seine Endbereiche mit ihren Oberseiten an den Unterseiten der Nutbegrenzungswände 42 des Gehäusehalses 12 an und arretieren gleichzeitig den Armaturdeckel 30.

Wie man in dieser Fig. 3 sieht, wird zur Montage der Armatur zunächst der Absperrschieber mit dem auf der Spindel sitzenden Einlegestück 26 von oben in den Gehäusehals 12 eingeführt, wobei das Einlegestück 26 so orientiert ist, daß seine größte Länge, zwischen seinen beiden Endbereichen 40, sich in der Richtung größter Länge des Durchmessers des Gehäusehalses 12 befindet; in Fig. 3 wäre das in Richtung von der linken Seite des Blattes zu der Unterseite des Blattes.

Auf der Höhe der abgewinkelten Erweiterungen 14 wird dann das Einlegestück 26 um 90° um die Spindel gedreht, so daß es mit seinen Endbereichen 40 in die durch die abgewinkelten Erweiterungen gebildeten Nuten 16 zu liegen kommt. In dieser Stelle ist das Einlegestück 26 gegen ein Herabfallen in die Armatur gesichert. Gleichzeitig hält das Einlegestück 26 die Spindel, die mit dem Spindelbund an den Oberseiten des Einlegestückes 26 anliegt, z.B. in der in Fig. 2 dargestellten Position. anschließend wird der Armaturdeckel 30 von oben so aufgesetzt, daß er mit seinem nach unten vorstehenden Abschnitt in die Gehäusehalsöffnung eingesetzt ist. Der Außenumfang des nach unten vorstehenden Abschnittes 32 des Armaturdeckels 30 ist komplementär zum Innenumfang des Gehäusehalses in dessen oberen Endbereich ausgebildet. Der Armaturdeckels 30 wird somit formschlüssig in seiner Lage auf dem Gehäusehals 12 gehalten. Dabei kommt der O-Ring 35 sowohl mit der Nut in dem nach unten vorstehenden Abschnitt des Armaturdeckels als auch mit dem Innenumfang des Gehäusehalses zur Anlage.

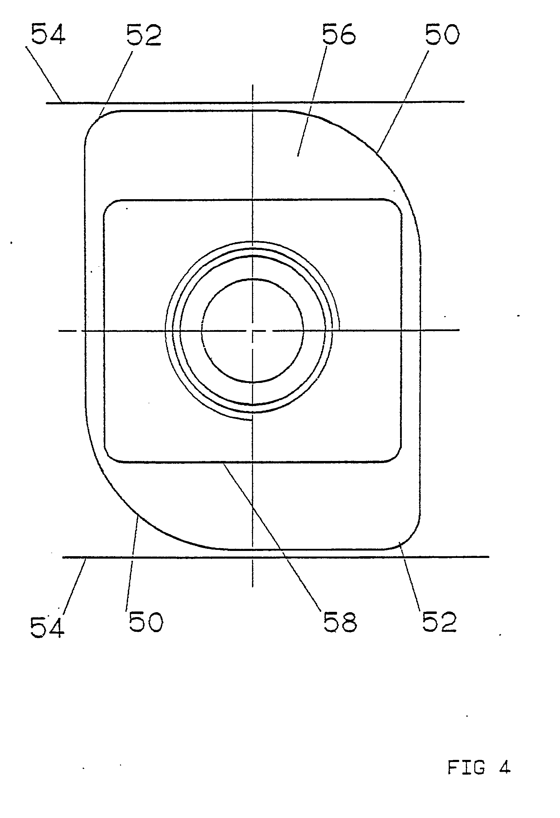

Eine Ausführungsform eines Einlegestückes 26 ist in Fig. 4 dargestellt. In dieser Darstellung sieht man, daß das Einlegestück im wesentlichen etwa rechtwinklig ausgebildet ist, wo es an diametral gegenüberliegenden Bereichen 50 abgerundet ist. Diese Ausführungsform des Einlegestückes 26 ist besonders günstig dann, wenn der Gehäusehals 12 im wesentlichen rechtwinklig ausgebildet ist. In diesem Falle erlauben die Abrundungen 50 ein Verdrehen des Einlegestückes 26 aus seiner Einführungsorientierung um 90°, in Fig. 4 gesehen, im Uhrzeigersinn. Wenn die größte Längserstreckung dieses rechtwinkligen Einlegestückes 26 dem kleineren Durchmesser des rechtwinkligen Gehäusehalses entspricht, ist eine Drehung im Uhrzeigersinn nur solange möglich, bis die Kanten 52 des Einlegestückes direkt an der Innenwand 54 des Gehäusehalses anliegen. Diese Ausführungsform erleichtert die Montage des Einlegestückes 26, das auch nicht versehentlich im Uhrzeigersinn weiter als bis in seine Halteposition gedreht werden kann. Es wird darauf hingewiesen, daß diese Form des Einlegestückes 26 sowohl dann günstig ist, wenn an der Innenseite des Gehäusehalses 12 lediglich konsolenartige Vorsprünge ausgebildet sind, deren Oberflächen als Auflageflächen für die Unterseiten der Endbereiche 40 des Einlegestückes 26 vorgesehen sind. Diese Ausführungsform ist jedoch in gleicher Weise sinnvoll und vorteilhaft, wenn in Längsseiten des rechtwinkligen Gehäusehalses abgewinkelte Erweiterungen ausgebildet sind, welche Nuten bilden, deren einander entgegengesetzte Grundflächen parallel zueinander liegen.

Diese Form des Einlegstückes 26, wie sie in Fig. 4 dargestellt ist, ist jedoch nicht zwingend. Wie man in Fig. 3 sieht, kann das Einlegestück 26 an allen vier Kanten Abrundungen aufweisen. Diese Ausführungsform ist besonders günstig, wenn der Querschnitt des Gehäusehalses ovalförmig ist und die Nuten in den abgewickelten Erweiterungen ovalförmig sind.

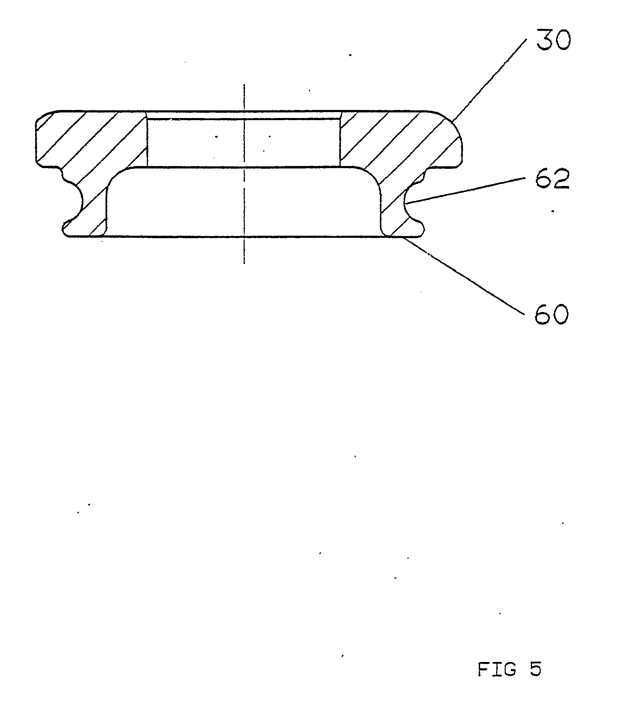

Die Fig. 5 zeigt einen Schnitt in Querrichtung des Armaturdeckels 30. In der Figur sieht man besonders gut, daß der Armaturdeckel 30 einen nach unten vorstehenden Absatz 60 hat, welcher einen kleineren Durchmesser als der obere Abschnitt des Armaturdeckels 30 hat. In dem nach unten vorstehenden Abschnitt 60 ist umlaufend eine Nut 62 ausgebildet, die einen O-Ring 35 aufnimmt.

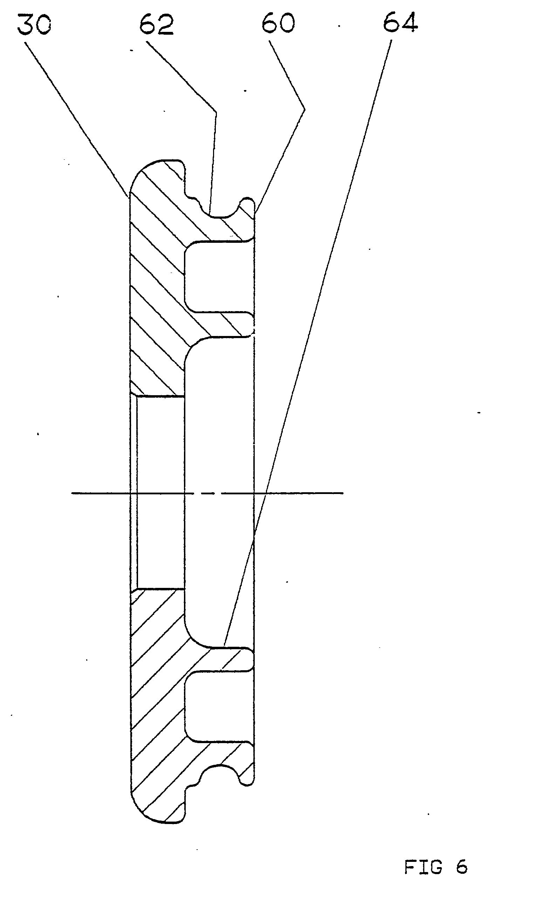

Die Fig. 6 zeigt einen Längsschnitt des in Fig. 5 gezeigten Armaturdeckels 30. In dieser Darstellung sieht man, daß der nach unten vorstehende Abschnitt 60 des Armaturdeckels 30 eine rechtwinklige Ausnehmung 64 aufweist. Diese Ausnehmung 64 ist komplementär zu einem nach oben vorstehenden Vorsprung 58 des Einlegestückes 56 bzw. 26 ausgebildet. Durch diese komplementäre Ausbildung wird das Einlegestück formschlüssig in dem Armaturdeckel 30 gehalten. Auf diese Weise ist sowohl beim Montieren als auch beim Demontieren das Einlegestück 30 drehfest in dem und durch den Armaturdeckel 30 gehalten.

Wie es in der rechten Seite der Fig. 2 bei 43 angedeutet ist, kann der Gehäusedeckel 30 seitlich um den Gehäusehals 12 umgreifend ausgebildet sein. Auf diese Weise ist sichergestellt, daß selbst dann, wenn die Armatur im Erdreich verlegt ist und ein starker Druck auf das Erdreich über dem Abschlußdeckel 30 ausgeübt wird, kein Sand, Schmutz oder dergleichen zwischen Armaturdeckel und Gehäusehals 12 eindringen kann.

Es wird darauf hingewiesen, daß die vorliegende Erfindung insbesondere Absperrarmaturen umfaßt, sie ist jedoch nicht auf Armaturen für Absperrschieber beschränkt. Vielmehr fallen sämtliche Armaturen und Gehäuse in den Schutzumfang der vorliegenden Erfindung, die einen nach oben offenen Gehäusehals aufweisen.

**Patentansprüche**

1. Armatur mit einem Gehäuse (12), in dem ein über eine Spindel (22) verstellbares Absperrteil (20) untergebracht ist, mit einem Deckel (30) und einer Spindelbuchse, (38)
gekennzeichnet durch
eine mit dem Gehäuse verbundene Auflageanordnung (17) für ein Einlegestück (26), das ein Auflager für einen Spindelbund (24) und eine Ausnehmung zur Durchführung der Spindel aufweist, wobei das Einlegestück mit mindestens zwei Endbereichen (40) seiner oberen Oberfläche gegen die Unterseite von mit dem Gehäuse verbundenen Widerlagern (42) anliegend, mittels der Spindelbuchse (38) mit dem Deckel (30) verbunden ist, der umlaufend auf dem oberen Rand des Gehäuses (12) aufliegt.

2. Armatur nach Anspruch 1, dadurch gekennzeichnet, daß die Auflageanordnung (17) aus zwei mit dem Gehäuse verbundenen Auflageflächen für das Einlegestück (26) besteht.

3. Armatur nach Anspruch 1, dadurch gekennzeichnet, daß die Auflageanordnung (17) aus einer mit dem Gehäuse verbundenen umlaufenden Auflagefläche für das Einlegestück (26) besteht.

4. Armatur nach Anspruch 1, dadurch gekennzeichnet, daß die mit Endbereichen des Einlegestückes (26) zusammenwirkenden Widerlager (42) einstückig mit dem Gehäuse (12) ausgebildet sind.

5. Armatur nach einem der vorhergehenden Ansprüche, dadurch gekennzeichnet, daß der obere Randbereich des Gehäuses (12) zumindest an zwei Bereichen teilweise nach innen hin eingezogen und die dadurch gebildeten Unterseiten 942) als Widerlager ausgebildet sind.

6. Armatur nach einem der vorhergehenden Ansprüche, dadurch gekennzeichnet, daß an gegenüberliegenden Seiten des Armaturgehäuses (12), mit Abstand vom oberen Rand, nach innen vorstehende Vorsprünge ausgebildet sind, deren Abstand voneinander kleiner als der größte Durchmesser des Einlegestückes (26) ist.

7. Armatur nach einem der vorhergehenden Ansprüche, dadurch gekennzeichnet, daß die Vorsprünge als Auflager für das Einlegestück (26) ausgebildet sind.

8. Armatur nach einem der vorhergehenden Ansprüche, dadurch gekennzeichnet, daß der sich nach oben erstreckende Bereich des Gehäuses im Querschnitt im wesentlichen länglich ausgebildet und der kleinere Durchmesser der Öffnung kleiner als der größte Durchmesser des Einlegestückes (26) ist.

9. Armatur nach einem der vorhergehenden Ansprüche, dadurch gekennzeichnet, daß der sich nach oben erstreckende Bereich des Gehäuses (12) im Querschnitt im wesentlichen rechteckig mit abgerundeten Eckbereichen ausgebildet ist.

10. Armatur nach einem der vorhergehenden Ansprüche, dadurch gekennzeichnet, daß der sich nach oben erstreckende Bereich des Gehäuses (12) im Querschnitt im wesentlichen oval oder ovalähnlich geformt ist.

11. Armatur nach einem der Ansprüche 1 bis 8, dadurch gekennzeichnet, daß der sich nach oben erstreckende Teil des Gehäuses (12) in seinem oberen Bereich an zwei gegenüberliegenden Seiten zwei abgewinkelte Erweiterungen (14) aufweist, durch die in den Innenwänden je eine Nut (16) gebildet ist, deren Breite gleich oder größer als die Breite der beiden Endbereiche des Einlegestückes (26) ist.

12. Armatur nach einem der vorhergehenden Ansprüche, dadurch gekennzeichnet, daß die abgewinkelten Erweiterungen (14) an den beiden Längsseiten des oberen Teils des Gehäuses (12) ausgebildet sind.

13. Armatur nach einem der vorhergehenden Ansprüche, dadurch gekennzeichnet, daß in den Nuten Anschläge vorgesehen sind, die mit den etwa rechtwinkligen Endbereichen (52) des Einlegestückes (26) zum Eingriff kommen.

14. Armatur nach einem der vorhergehenden Ansprüche, dadurch gekennzeichnet, daß das Einlegestück (26) an seiner Oberseite eine stufenartige Erhebung (34) aufweist, deren Außenumfang komplementär zu einer Ausnehmung in der Unterseite des Deckels ausgebildet ist.

15. Armatur nach Anspruch 14, dadurch gekennzeichnet, daß der Deckel (30) einen stufenartig nach unten vorstehenden Bereich (32) verkleinerten Durchmessers aufweist, welcher im wesentlichen komplementär zum benachbarten inneren Umfang des oberen Teils der Öffnung des Gehäuses (12) ausgebildet ist.

16. Armatur nach einem der vorhergehenden Ansprüche, dadurch gekennzeichnet, daß der nach unten vorstehende Bereich (32) des Deckels (30) eine umlaufende Nut (68) zur Aufnahme eines O-Ringes (35) aufweist.

17. Armatur nach einem der vorhergehenden Ansprüche, dadurch gekennzeichnet, daß der Deckel (30) den nach oben weisenden Rand des Gehäuses vollständig abdeckt.

18. Armatur nach einem der vorhergehenden Ansprüche, dadurch gekennzeichnet, daß der Deckel (30) seitlich um den Rand der Öffnung des Gehäuses nach unten übergreift (43).

## Revendications

1. Elément de robinetterie comportant un carter (12), dans lequel est logé un élément de blocage (20) déplaçable par l'intermédiaire d'une broche (22), et comportant un couvercle (30) et une douille (38) servant à loger la broche, caractérisé par un dispositif d'appui (17), relié au carter et prévu pour un élément d'insertion (26), qui comporte un support pour un collet (24) de la broche et un évidement pour le passage de la broche, l'élément d'insertion, qui s'applique par au moins deux zones d'extrémité (40) de sa surface supérieure contre la face inférieure de butée (42) reliée au carter, étant reliée au moyen de la douille (38) logeant la broche au couvercle (30), qui s'applique, en l'entourant, sur le bord supérieur du carter (12).

2. Elément de robinetterie selon la revendication 1, caractérisé en ce que le dispositif d'appui (17) est constitué par deux surfaces d'appui, reliées au carter et prévues pour l'élément d'insertion (26).

3. Elément de robinetterie selon la revendication 1, caractérisé en ce que le dispositif d'appui (17) est constitué par une surface d'appui circonférentielle, reliée au carter et prévue pour l'élément d'insertion (26).

4. Elément de robinettereie selon la revendication 1, caractérisé en ce que les butées (42), qui coopèrent avec les zones d'extrémité de l'élément d'insertion (26), sont formées d'un seul tenant avec le carter (12).

5. Elément de robinetterie selon l'une des revendications précédentes, caractérisé en ce que la partie marginale supérieure du carter (12) présente, au moins en deux emplacements, un renfoncement partiel dirigé vers l'intérieur et que les faces inférieures (42) ainsi formées sont réalisées sous la forme de butées.

6. Elément de robinetterie selon l'une des revendications précédentes, caractérisé en ce que sur des côtés opposés du carter (12) de l'élément de robinetterie, il est prévu, à distance du bord supérieur, des parties saillantes dirigées vers l'intérieur et dont la distance réciproque est inférieure au diamètre maximum de l'élément d'insertion (26).

7. Elément de robinetterie selon l'une des revendications précédentes, caractérisé en ce que les parties saillantes sont agencées sous la forme d'appuis pour l'élément d'insertion (26).

8. Elément de robinetterie selon l'une des revendications précédentes, caractérisé par le fait que la partie, qui s'étend vers le haut, du carter est agencée de manière à posséder une forme sensiblement oblongue en coupe transversale et que le plus petit diamètre de l'ouverture est inférieur au diamètre maximum de l'élément d'insertion (26).

9. Elément de robinetterie selon l'une des revendications précédentes, caractérisé en ce que la partie, qui s'étend vers le haut, du carter (12) est agencée de telle sorte que sa section transversale possède une forme sensiblement rectangulaire avec les zones d'angle arrondies.

10. Elément de robinettereie selon l'une des revendications précédentes, caractérisé en ce que la partie, qui s'étend vers le haut, du carter (12) possède une section transversale sensiblement ovale ou semblable à une forme ovale.

11. Elément de robinettereie selon l'une des revendications 1 à 8, caractérisé en ce que la partie, qui s'étend vers le haut, du carter (12) possède dans sa zone supérieure, sur deux côtés opposés, deux élargissements coudés (14), qui forment, dans les parois extérieures, respectivement une rainure (16), dont la largeur est égale ou supérieure à la largeur des deux zones d'extrémité de l'élément d'insertion (26).

12. Elément de robinettereie selon l'une des revendications précédentes, caractérisé par le fait que les élargissements coudés (4) sont formés sur les deux côtés longitudinaux de la partie supérieure du carter (12).

13. Elément de robinetterie selon l'une des revendications précédentes, caractérisé en ce qu'il est prévu, dans les rainures, des butées qui viennent en prise avec les zones d'extrémité approximativement à angle droit (52) de l'élément d'insertion (26).

14. Elément de robinettereie selon l'une des revendications précédentes, caractérisé en ce que l'élément d'insertion (26) possède, sur sa face supérieure, une partie surélevée de forme étagée (34), dont le pourtour extérieur est agencé avec une forme complémentaire d'un évidement ménagé dans la face inférieure du couvercle.

15. Elément de robinetterie selon la revendication 14, caractérisé en ce que le couvercle (30) possède une partie (32) de forme étagée, qui fait saillie vers le bas et possède un diamètre réduit et qui est agencé avec une forme sensiblement complémentaire du pourtour intérieur, voisin, de la partie supérieure de l'ouverture du carter (12).

16. Elément de robinetterie selon l'une des revendications précédentes, caractérisé en ce que la partie (3), qui fait saillie vers le bas, du couvercle (30) possède une rainure circonférentielle (68) servant à logér un anneau torique (35).

17. Elément de robinetterie selon l'une des revendications précédentes, caractérisé en ce que le couvercle (30) recouvre complètement le bord, tourné vers le haut, du carter.

18. Elément de robinetterie selon l'une des revendications précédentes, caractérisé en ce que le couvercle (30) s'engage latéralement (43) au-dessous du bord de l'ouverture du carter.

**Claims**

1. A valve with a housing (12) in which housing a gate member (20), movable by means of a spindle (22), is accommodated, with a cover (30) and a screw-threaded casing (38), characterized by a support structure means (17), connected to the housing, for an insert (26), having a support for the spindle ring (24) and with a bore for the passage of the spindle, and at least two end portions (40) of the upper surface of the insert lying against the underside of counter-supports (42) connected to the housing and the insert being connected to the cover (30) by means of the screw-threaded casing (38), which cover lies circumferentially on the upper edge of the housing (12).

2. A valve according to claim 1, characterized in that the support structure (17) includes two support surfaces for the insert (26) which surfaces are connected to the housing.

3. A valve according to claim 1, characterized in that the support structure (17) includes a peripheral support surface for the insert (26), which surface is connected to the housing.

4. A valve according to claim 1, characterized in that the counter-supports (42), which cooperate with the end portions of the insert (26), are formed as integral parts of the housing (12).

5. A valve according to one of the preceding claims, characterized in that the upper edge region of the housing (12) is partly turned inwards in at least two places and that the undersides (42) thus formed are formed as counter-supports.

6. A valve according to one of the preceding claims, characterized in that inwardly extending projections are formed on opposite sides of the valve housing (12) spaced apart from the upper edge, and that the distance between the projections is smaller than the largest diameter of the insert (26).

7. A valve according to one of the preceding claims, characterized in that the projections are designed as supports for the insert (26).

8. A valve according to one of the preceding claims, characterized in that the upwardly extending part of the housing as a substantially oblong cross-section and that the smaller diameter of the opening is smaller than the largest diameter of the insert (26).

9. A valve according to one of the preceding claims, characterized in that the upwardly extending part of the housing (12) is substantially rectangular in cross-section, with rounded corners.

10. A valve according to one of the preceding claims, characterized in that the upwardly extending part of the housing (12) is substantially oval or ovoid in cross-section.

11. A valve according to one of the claims 1–8 characterized in that the upwardly extending part of the housing (12) is provided with two angled extensions (14) on two opposite sides of its upper part, which each form a groove (16) in the inner walls, the width of which groove is as large as or larger than the width of the two end portions of the insert (26).

12. A valve according to one of the preceding claims, characterized in that the angled extensions (14) are formed on the two longer sides of the upper part of the housing (12).

13. A valve according to one of the preceding claims, characterized in that stops are provided in the grooves, which engage with the approximately rectangular end portions (52) of the insert (26).

14. A valve according to one of the preceding claims, characterized in that the upper side of the insert (26) has a step-like raised portion (34), the outer contour of which corresponds to a recess in the underside of the cover.

15. A valve according to claim 14, characterized in that the cover (30) is provided with a downwardly projecting, step-like region (32) of reduced diameter, which substantially corresponds to the neighbouring inner perimeter of the upper part of the opening of the housing (12).

16. A valve according to one of the preceding claims, charcterized in that the downwardly projecting region (32) of the cover (30) is provided with a peripheral groove (68) for receiving an O-ring (35).

17. A valve according to one of the preceding claims, characterized in that the cover (30) completely covers the upwardly facing edge of the housing.

18. A valve according to one of the preceding claims, characterized in that the cover (30) laterally reaches over the edge of the housing opening and extends downwardly thereover (43).

FIG 1

FIG 2

FIG 3

FIG 4

FIG 5

30    62    60    64

FIG 6